Europäisches Patentamt

European Patent Office

Office européen des brevets

(11) Veröffentlichungsnummer: **0 483 471 A2**

# EUROPÄISCHE PATENTANMELDUNG

(21) Anmeldenummer: **91113977.2**

(22) Anmeldetag: **21.08.91**

(51) Int. Cl.⁵: **B23B 31/24**

(30) Priorität: **31.10.90 DE 4034595**

(43) Veröffentlichungstag der Anmeldung:
**06.05.92 Patentblatt 92/19**

(84) Benannte Vertragsstaaten:
**AT BE CH DE ES FR GB IT LI NL SE**

(71) Anmelder: **GEDIB INGENIEURBÜRO UND INNOVATIONSBERATUNG GMBH**
**Schützenstrasse 1**
**W-5920 Bad Berleburg(DE)**

(72) Erfinder: **Bald, Brigitte**
**Schützenstrasse 1**
**W-5920 Bad Berleburg(DE)**

(74) Vertreter: **Fay, Hermann, Dipl.-Phys. Dr. et al**
**Ensingerstrasse 21 Postfach 1767**
**W-7900 Ulm (Donau)(DE)**

(54) **Bewegungswandler zum Umsetzen einer rotatorischen Eingangsbewegung in eine translatorische Ausgangsbewegung.**

(57) Der Bewegungswandler besteht aus einem Rollenwälzgewindetrieb (5) mit zwei koaxial in einander angeordneten Grundelementen (1), (2, 2') und zwischen beiden sich abwälzenden Rollen (3), und aus einem in der Koordinatenachse der Ausgangsbewegung nicht verlagerbaren Anschlußbauelement (4), gegen welches das rotatorisch bewegte Grundelement (1) über eine Wälzlagerung axial abgestützt ist. Das Innere, relativ zum Anschlußbauelement (4) nicht rotatorisch bewegte Grundelement ist zweiteilig ausgebildet und jedes der beiden Einzelteile (2, 2') ist mit einem Wälzgewinde (37, 39) gleichen Wälzdurchmessers und gleicher Gangzahl, jedoch mit Steigungswinkeln mit in Bezug auf das andere Einzelteil entgegengesetztem Vorzeichen versehen. Dem Wälzgewinde (37, 39) jedes Einzelteils (2, 2') ist ein Rollenkranz (12, 13) von über den Wälzumfang des Einzelteils verteilten Rollen (15, 16) zugeordnet. Die translatorische Ausgangsbewegung (7) ist die Summe der beiden einzelnen translatorischen Relativbewegungen jedes der beiden Einzelteile (2, 2') gegenüber jeweils dem einteiligen Grundelment (1).

EP 0 483 471 A2

Die Erfindung betrifft einen Bewegungswandler zum Umsetzen einer rotatorischen Eingangsbewegung in eine translatorische Ausgangsbewegung, bestehend aus einem Wälzgewindetrieb mit zwei koaxial ineinander angeordneten Grundelementen und zwischen beiden sich abwälzenden Wälzkörpern, und aus einem in der Koordinatenachse der Ausgangsbewegung nicht verlagerbaren Anschlußbauelement, relativ zu welchem die rotatorische Eingangsbewegung und die translatorische Ausgangsbewegung durchführbar sind und gegen welches das rotatorisch bewegte Grundelement über eine Wälzlagerung axial abgestützt ist.

Bei einem aus DE 39 37 448 A1 bekannten Bewegungswandler dieser Art ist das die rotatorische Eingangsbewegung durchführende Grundelement über das mit Kugeln als Wälzkörper ausgestattete Wälzgewinde am anderen Grundelement geführt und dieses Grundelement festsitzend am Anschlußbauelement angeordnet, so daß das rotatorisch bewegte Grundelement über das Wälzgewinde auch axial abgestützt ist und daher relativ zum Anschlußbauelement nicht nur die rotatorische Eingangsbewegung, sondern auch die ihr überlagerte translatorische Ausgangsbewegung ausführt, die über ein Radial-Rillenkugellager vom Grundelement abgenommen und einer Spannstange mitgeteilt wird, die in einer das Anschlußbauelement bildenden hohlen Drehspindel einer Drehmaschine axial verschiebbar angeordnet ist. Im übrigen ist bei dem bekannten Bewegungswandler die rotatorische Eingangsbewegung von einem vorgeschalteten weiteren, mit der Drehspindel umlaufenden Bewegungswandler abgeleitet, der eine von stationären Organen über Axialwälzlager auf den Wandlereingang übertragene translatorische Stellbewegung in die rotatorische Eingangsbewegung für das rotatorisch bewegte Grundelement wandelt.

An derartige Bewegungswandler werden beim Einsatz an schnell umlaufenden Drehspindeln von Werkzeugmaschinen zum Zwecke der Erzeugung von Spannbewegungen bzw. Spannkräften hohe Anforderungen gestellt. In erster Linie gehören hierzu:

1) Im Hinblick auf Massenträgheitsmomente und schwingende Massen sind die Baudurchmesser und -längen möglichst klein zu halten.

2) Es müssen hohe Kräfte übertragen werden können, was vor allem die Tragfähigkeit der beteiligten Wälzbahnen betrifft.

3) Nicht auswuchtbare Unwucht-Fehler müssen konstruktionsbedingt möglichst vermieden werden, da sie andernfalls das Arbeitsergebnis von Werkzeugmaschinen in beachtlichem Maße beeinflussen.

4) Es muß möglich sein, bestimmte vorgegebene Übersetzungsverhältnisse zwischen dem Drehwinkel der rotatorischen Eingangsbewegung und dem Verlagerungsweg der translatorischen Ausgangsbewegung zu verwirklichen. Bezüglich dieser Anforderung ergibt sich eine Beeinträchtigung oft dadadurch, daß sich die Übersetzungsverhältnisse dann nicht in gewünschter Weise verwirklichen lassen, wenn es gleichzeitig gilt, hohe Tragzahlen zu gewährleisten, sowie kleine Baudurchmesser und konstruktiv vorgegebene große Steigungen einzuhalten.

Die bekannten Bewegungswandle lassen bezüglich dieser Anforderungen viele Wünsche offen. Nachteilig sind auch die hohen Fertigungskosten für die Herstellung der Bauteile der Bewegungswandler, die vor allem durch die mit hoher Genauigkeit zu schleifenden Wälzbahnen, insbes. die gewindeförmigen Wälzbahnen entstehen.

Der Erfindung liegt die Aufgabe zugrunde, einen Bewegungswandler der eingangs genannten Art so auszubilden, daß eine hohe axiale Belastbarkeit und große Gewindesteigungen des Wälzgewindetriebs bei dennoch kleinen Baudurchmessern erreichbar sind, so daß sich eine Verbesserung hinsichtlich Tragfähigkeit, Steigung und Baugröße insgesamt ergibt und darüber hinaus durch Vereinfachung der Bauweise die Fertigungskosten gesenkt werden.

Die erfindungsgemäße Lösung dieser Aufgabe ist gekennzeichnet, durch die Kombination der folgenden Merkmale:

a) die Wälzkörper sind Rollen,

b) das zweite, relativ zum Anschlußbauelement nicht rotatorisch bewegte Grundelement ist zweiteilig ausgebildet und jedes der dadurch gebildeten beiden Einzelteile ist mit einem Wälzgewinde gleichen Wälzdurchmessers und gleicher Gangzahl, jedoch mit Steigungswinkeln mit in Bezug auf das andere Einzelteil entgegengesetztem Vorzeichen versehen,

c) dem Wälzgewinde jedes Einzelteils ist ein eigener Rollenkranz von auf dem Wälzumfang des Einzelteils verteilten Rollen mit Rollenwälzbahnen zugeordnet, die sich am Wälzgewinde des Einzelteils einerseits und am einteiligen Grundelement andererseits abwälzen,

d) eines der Einzelteile bildet das Anschlußbauelement oder ist mit dem Anschlußbauelement fest verbunden, und der diesem Einzelteil zugeordnete Rollenkranz bildet die Wälzlagerung für die axiale Abstützung des rotatorischen Grundelements gegen das Anschlußelement,

e) die translatorische Ausgangsbewegung ist die Summe der beiden einzelnen translatorischen Relativbewegungen jedes der beiden Einzelteile gegenüber jeweils dem einteiligen Grundelement,

f) die Rollen des einen Rollenkranzes und die Rollen des anderen Rollenkranzes sind miteinander durch mechanische Mittel gekoppelt, die einen Synchronlauf beider Rollenkränze bezüglich ihres Drehwinkels um die Achse des Wälzgewindetriebes erzwingen.

Bei dieser Lösung ist die zu erzeugende translatorische Ausgangsbewegung in zwei sich summierende Einzelbewegungen aufgeteilt, wobei die Einzelbewegungen durch Abwälzen von zwei axial nebeneinander liegenden Rollenkränzen auf zwei unterschiedlichen Wälzgewinden erzeugt werden. Die unterschiedlichen Wälzgewinde sind auf den beiden Einzelteilen des zweiteiligen Grundelements mit gegensinnigen Steigungsrichtungen untergebracht. Zwischen den beiden Rollenkränzen sind mechanische Mittel vorgesehen, die zur präzisen Einhaltung der Betriebsweise Zwangskräfte von den Rollen des einen auf die Rollen des anderen Rollenkranzes und umgekehrt ausüben können. Die im Ergebnis erreichten wesentlichen Vorteile lassen sich kurz wie folgt zusammenfassen:

1) Bei Bewegungswandlern mit erforderlicher großer Steigung braucht die benötigte Gesamtsteigung am Wälzgewinde jedes Einzelteils des zweiteiligen Grundelements nur zur Hälfte realisiert zu werden. Dies eröffnet die Möglichkeit zu Verbesserungen der Parameter für den Baudurchmesser und für die Tragfähigkeit des Wälzgewindetriebs, wobei die Tragfähigkeit wiederum abhängig ist von der Anzahl, vom Durchmesser und vom Rillenabstand der Rollen, sowie von der Anzahl der Gänge des Wälzgewindes an den Einzelteilen des zweiteiligen Grundelements.

2) Durch die gegensinnige Steigungsrichtung an den Wälzgewinden der Einzelteile des zweiteiligen Grundelementes wird eine axiale Auswanderung der Rollen relativ zum einteiligen Grundelement verhindert, ohne daß es dafür sonst benötigter zusätzlicher Bauteile bedarf. Dies ist vorteilhaft sowohl im Sinne einer kleinen Baugröße als auch einer Reduzierung der Fertigungskosten.

3) Da die axiale Abstützung des einteiligen Grundelements über einen der Rollenkränze erfolgt, kann auf ein dafür sonst notwendiges eigenes Axial-Wälzlager verzichtet werden, was einer kompakten Bauweise, der Vermeidung von nicht korrigierbaren Unwuchten und der Verringerung von Fertigungskosten zugute kommt.

Die mechanischen Mittel, welche die Rollen beider Rollenkränze miteinander koppeln, übertragen Kräfte zwischen den jeweils miteinander gekoppelten Rollen derart, daß diese Mittel mit den Rollen bei deren Abwälzung in gleicher Kreisbewegung um die Mittenachse des Rollenwälzgewindetriebs mitgeführt werden, der Drehwinkel dieser Mittel um die Mittenachse also im wesentlichen immer gleich groß ist wie der der Rollenachsen bei der Abwälzung der Rollen an den Grundelementen.

Vorzugsweise halten dabei diese mechanischen Mittel die Rollen auch achsparallel zur Achse der Grundelemente. Dazu brauchen die mechanischen Mittel nur zur Übertragung von Biegemomenten zwischen den Rollen ausgebildet zu sein, wobei diese übertragenen Biegemomente den Drehmomenten entsprechen, deren es an den einzelnen Rollen bedarf, um die Rollendrehachsen zur Mittenachse der Grundelemente parallel zu halten.

In einer bevorzugten Ausführungsform sind die mechanischen Mittel von mehrfach vorhandenen Körpern gebildet, die je eine Rolle des einen Rollenkranzes mit je einer Rolle des anderen Rollenkranzes gleichlaufend verbinden. Diese Körper können über den Umfang der Rollenkränze verteilte Führungsstücke sein, die in Führungsfenstern die Rollen aufnehmen. Einfacher aber und daher von der Erfindung bevorzugt sind die Körper Achsenteile, welche die jeweils beiden Rollen in koaxialer Lage miteinander verbinden. Insbes. ist eine sehr zweckmäßige Ausführungsform dadurch gekennzeichnet, daß die beiden Rollen und das Achsenteil einstückig miteinander ausgebildet sind. Soweit die Rollen beider Rollenkränze paarweise koaxial miteinander verbunden sind, kann zweckmäßigerweise am Umfang der Rollen eine Verzahnung vorgesehen sein, die mit einer korrespondierenden Umfangsverzahnung am einen und/oder anderen Grundelement im Eingriff steht, was zusätzlich den Rollengleichlauf und die Einhaltung der Rollenabstände in beiden Rollenkränzen gewährleistet. Statt durch mehrfach vorhandene Körper können die mechanischen Mittel nach einem anderen Vorschlag der Erfindung von einem beiden Rollenkränzen gemeinsamen Käfigring gebildet sein, in dem die Rollen beider Rollenkränze formschlüssig geführt sind.

Eine weiter besonders bevorzugte Ausführungsform ist dadurch gekennzeichnet, daß die Rollenwälzbahnen aller Rollen ohne Gewindesteigung ausgeführt und durch die Seitenflanken von im gleichen axialen Abstand am Umfang der Rollen eingebrachten Rillen gebildet sind. Derartige Rollen sind durch Einstech-Schleifen besonders gleichmäßig untereinander (Tragfähigkeit) und auch besonders kostengünstig herstellbar. Zusätzlich ergibt sich die entsprechend sehr vorteilhafte Möglichkeit, daß die Wälzbahnen am einteiligen Grundelement ohne Gewindesteigung ausgeführt und durch die Seitenflanken von im gleichen axialen Abstand am Umfang des einteiligen Grundelements eingebrachten Rillen gebildet sind. Die praktische Ausführung derartiger Bauarten setzt zwar voraus, daß die Rollen beider Rollenkränze paarweise koaxial und parallel zur Mittenachse der Grundelemente zwangsgeführt und in Umfangsrichtung auf gleichem Abstand gehalten werden. Jedoch ergibt sich dies bei der Erfindung ohne weitere Hilfsmittel aus dem Umstand, daß die Wälzgewinde an den Einzelteilen des zweiteiligen Grundelementes gegensinnige Steigung aufweisen und eine spiegelbildlich symmetrische Belastungsweise vorliegt.

Die rotatorische Eingangsbewegung kann dem einteiligen Grundelement je nach Form des Einsatzes des Bewegungswandlers auf verschiedene Weise mitgeteilt werden. Handelt es sich um die unmittelbare Betätigung von Spannmitteln zum Spannen von Werkstücken oder Werkzeugen, oder von einer Einrichtung zum Festspannen des Spannmittels selbst an einer Drehspindel, um beispielsweise das Spannmittel an der Drehspindel schnell wechseln zu können, kann die rotatorische Eingangsbewegung von Hand ausgeübt werden. Handelt es sich um den Einsatz des Bewegungswandlers bei kraftbetätigten Spannmitteln für Werkstücke oder Werkzeuge, ist die rotatorische Eingangsbewegung mittels kraftbetriebener Einrichtungen zuzuführen. Insbes. für den Fall, daß die Durchführung einer Spannbewegung auch bei laufender Drehspindel möglich sein soll, empfiehlt sich besonders eine Anordnung derart, daß die rotatorische Eingangsbewegung dem einteiligen Grundelement durch einen vorgeschalteten weiteren Bewegungswandler mitgeteilt wird, der eine translatorische Stellbewegung in die rotatorische Eingangsbewegung des Grundelements durch ein Getriebe wandelt, das in umgekehrter Wirkrichtung eine rotatorische Bewegung des Grundelements verhindert. Die dem vorgeschalteten weiteren Bewegungswandler erteilte translatorische Stellbewegung kann dann durch stationäre kraftbetätigte Einrichtungen erzeugt werden, während in umgekehrter Wirkrichtung der vorgeschaltete Bewegungswandler Rückdrehungen des einteiligen Grundelements verhindert, so daß die translatorische Ausgangsbewegung am zweiteiligen Grundelement und die damit erzeugte Spannkraft erhalten bleiben, auch wenn am vorgeschalteten weiteren Bewegungswandler die Stellkraft, die die translatorische Stellbewegung erzeugt hat, nach Durchführung dieser Stellbewegung abgeschaltet wird. Der vorgeschaltete weitere Bewegungswandler sichert daher den Rollenwälzgewindetrieb gegen selbsttätiges Verstellen im Sinne einer Lockerung des durch ihn bewirkten Spannzustandes.

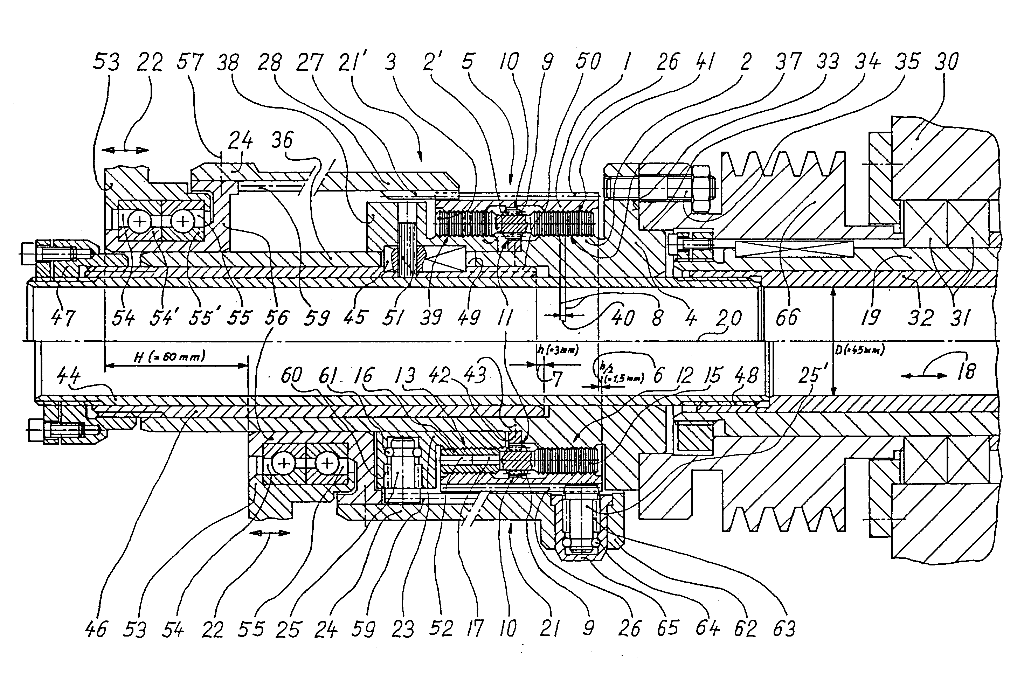

Ein Ausführungsbeispiel der Erfindung wird nachstehend unter Bezugnahme auf die Zeichnung im einzelnen erläutert.

Die einzige Figur zeigt im Axialschnitt das hintere Teil eines Spindelkastens 30 einer Drehmaschine mit dem Spindelende der Drehspindel 19, an welches ein erfindungsgemäßer Bewegungswandler angeflanscht ist, der zur Erzeugung einer Spannbewegung bestimmt ist. Dabei ist der Einfachheit wegen nur die mit Hilfe zweier Wälzlager 31 gebildete hintere Lagerstelle von insgesamt zwei Lagerstellen der um die Mittelachse 20 rotierenden Drehspindel 19 gezeigt. Dem Fachmann ist bekannt, wie ein kompletter Spindelkasten im Axialschnitt aussehen kann, so daß insoweit auf die Darstellung weiterer Einzelheiten verzichtet ist. Ebenfalls bekannt sind dem Fachmann kraftbetätigte Spannmittel, z. B. Dreibackenfutter oder dergl., von welchen man sich eines angeschlossen an den (nicht dargestellten) Kopf der Drehspindel 19 vorstellen kann, das über das Zug/Druck-Rohr 32 mit einer Spannbewegung 18 betätigt wird.

Am Ende der Drehspindel 19 ist in üblicher Weise eine Riemenscheibe 66 befestigt, an deren Anschlußstelle, definiert durch die Planfläche 33, die Zentrierbohrung 34 und die Befestigungsschrauben 35, ein Spannaggregat angeschlossen ist, welches fast ausschließlich aus Bauteilen besteht, welche dem erfindungsgemäßen Bewegungswandler zuzuordnen sind.

Zunächst sei bemerkt, daß das Spannaggregat nur zur Erzeugung eines kurzen Spannhubes von h = 3 mm ausgebildet ist, womit es beispielsweise zur Bedienung der Spannmittel einer Stangendrehmaschine (Durchmesser D etwa 25 mm) eingesetzt werden könnte. Weiterhin wird bemerkt, daß das Spannaggregat in der oberen bzw. unteren Figurenhälfte in den zwei möglichen Endstellungen seiner Betätigung dargestellt ist. Außerdem sind in beiden Figurenhälften zwei verschiedene Ausführungsformen von erfindungsgemäßen Bewegungswandlern gezeigt, worauf im weiteren Verlauf der Beschreibung noch näher eingegangen wird.

Man erkennt das an seiner linken Seite als Trägerhülse 36 ausgebildete Anschlußbauelement 4, welches das gesamte Spannaggregat trägt und welches mit seinem Flanschteil an der Anschlußstelle der Riemenscheibe 66 angeschlossen ist.

Das Anschlußbauelement 4 weist an der durch 2 bezeichneten Stelle ein Außengewinde 37 auf. Weiter links sitzt auf der Trägerhülse 36 längsverschieblich, doch drehfest zu ihr, ein Schubring 23 mit einem Bundteil 38 und einem Buchsenteil, von welchen letzteres ein Außengewinde 39 trägt.

Betrachtet man zunächst die obere Figurenhälfte, so erkennt man einen Rollenwälzgewindetrieb 5, bestehend aus dem als Mutter dienenden einteiligen Grundelement 1, den mehrfach am Umfang vorhandenen, allgemein mit 3 bezeichneten Rollen und dem zweiteiligen Grundelement mit den Einzelteilen 2, 2', wobei das Einzelteil 2 das vorerwähnte Buchsenteil darstellt. Die Rollen 3 weisen beidseits abstandsgleiche Rillen 8 mit einem Rillenabstand 40 (z. B. 2 mm) auf, wobei die beiden Seitenflanken einer Rille als Wälzbahnen mit einem Steigungswinkel gleich Null ausgebildet sind. Das Profil der Rillen - im Axialschnitt gesehen - weist einen Flankenwinkel von etwa 90° auf, wobei die Flanken selbst leicht nach außen gewölbt sind.

Das einteilige Grundelement 1 verfügt an seiner inneren Zylinderseite über abstandsgleiche Rillen 41 mit dem gleichen Rillenabstand der Rollen. Das Profil der Rillen des einteiligen Grundelements 1 weist ebenfalls einen Flankenwinkel von 90° auf. Die beiden Flanken einer Rille sind als Wälzbahnen mit einem Steigungswinkel gleich Null ausgebildet, und im Axialschnitt gesehen sind die Flanken gerade.

Die Außengewinde 37 bzw. 39 der Einzelteile 2, 2' des zweiteiligen Grundelements sind mehrgängige Gewinde mit hoher Gangzahl gleich N (z. B. N = 18), mit einem Rillenabstand 40, welcher dem der Rollen 3 entspricht, mit einem Flankenwinkel von 90° und mit geraden Flanken, gesehen im Axialschnitt durch die Mittenachse 20. Beide Flanken jeder Rille sind als gewindeförmige Wälzbahnen ausgebildet. Die beiden Gewinde 37 und 39 unterscheiden sich nur dadurch, daß die Steigungsrichtungen entgegen gesetzt sind.

Eine Umfangsverzahnung 9 an den Rollen 3 ist gleichzeitig im Eingriff mit einer Innenverzahnung 10 am einteiligen Grundelement 1 und einer Außenverzahnung 11 eines Zahnrings 42, welcher fest mit dem Anschlußbauelement 4 verbunden ist (angedeutet durch die Mittellinie 43). Dieser Verzahnungseingriff dient lediglich der Vermeidung von Schlupf beim Abwälzen der Rollen zwischen dem einteiligen Grundelement 1 und den beiden Einzelteilen 2, 2' des zweiteiligen Grundelements, wobei der Schlupf nur bei mangelnder zu übertragender Axialkraft zwischen den beiden Einzelteilen 2, 2' zu erwarten ist.

Bei einer Verdrehung des einteiligen Grundelementes 1 relativ zu den Einzelteilen 2, 2' des zweiteiligen Grundelements erfolgt eine Abwälzung der Wälzbahnen der Rollen 3 gleichzeitig auf den Wälzbahnen des einteiligen Grundelements 1 und der beiden Einzelteile 2, 2'. Dabei tritt keine axiale Verlagerung der Rollen 3 relativ zum einteiligen Grundelement 1 auf. Dagegen erfolgt eine Verlagerung der Rollen 3 jeweils relativ zu den Einzelteilen 2, 2' und zwar um jeweils gleich große Beträge h/2 bei einem maximalen Verdrehwinkel der Mutter, wobei typische Werte h/2 = 1,5 mm bei ca. 27° sind.

Da sich die Rollen relativ zum einteiligen Grundelement 1 nicht axial verlagern, wird bei einem Verdrehwinkel das einteilige Grundelement 1 selbst um den Betrag h/2 in axialer Richtung versetzt. Die axiale Verschiebung des Schubringes 23, der mit dem Einzelteil 2' des zweiteiligen Grundelements verbunden ist, weist dagegen den Betrag h (h = 3 mm bei ca. 27°) auf.

Die axiale Verschiebung h des Schubringes 23 stellt die translatorische Ausgangsbewegung des Wälzgewindetriebs 5 als Summe zweier Einzelverlagerungen der Rollen relativ zu den Einzelteilen 2, 2' des zweiteiligen Grundelements dar und bildet im vorliegenden Beispiel die Größe des Spannweges.

Die Übertragung der Spannbewegung vom Schubring 23 auf das Zwischenrohr 46, und von diesem schließlich über einen Anpaßring 47 auf das mit dem Zug/Druck-Rohr 32 über ein Gewinde 48 verbundene Spannrohr 44 erfolgt durch schlitzartige Öffnungen 49 in der Trägerhülse 36. Diese Übertragung geschieht mittels dreier Schubsegmente 45, welche aus einem zylindrischen Ring durch segmentförmige Abtrennung entstanden sind, wobei die Schubsegmente 45 im Schubring 23 in eine zylindrische Innenumfangsnut und im Zwischenrohr 46 in eine zylindrische Außenumfangsnut eingreifen. Eine Bajonettöffnung 50 im Zwischenrohr ermöglicht die Montage. Die Umfangsbreite der Schubsegmente 45 ist der Umfangsbreite der schlitzartigen Öffnungen 49 angepaßt, so daß die Schubsegmente bei ihrer Verschiebung in den Öffnungen 49 verdrehsicher geführt sind. Ein Stift 51 sichert den Schubring 23 und das Zwischenrohr 46 gemeinsam gegen eine Verdrehung relativ zur Trägerhülse 36.

In der unteren Figurenhälfte besitzt der jedem Einzelteil 2, 2' des zweiteiligen Grundelements zugeordnete Rollenkranz 12 bzw. 13 am Umfang angeordnete eigene Rollen 15 bzw. 16. Auch hier ist - wie schon vorstehend erwähnt - eine Verzahnung 9 vorgesehen, mit welcher den Einzelrollen 15 eine Zwangsabwälzung aufgezwungen wird. Ein an der Rolle 15 angebrachtes zapfenförmiges Achsenteil 17 ragt in eine Bohrung 53 der Rolle 16 und garantiert auf diese Weise den Wälzumlauf beider Kränze 12, 13 mit synchronem Drehwinkel und die koaxiale Ausrichtung der jeweils zwei miteinander verbundenen Rollen 15, 16. Außerdem sorgen die Achsenteile 17 für die achsparallele Ausrichtung der Rollen 15, 16 zur Mittelachse 20.

Die Gewindesteigungen an den beiden Einzelteilen 2, 2' des zweigeteilten Grundelements können nach Betrag und/oder Richtung auch unterschiedlich ausgeführt werden, womit bei unterschiedlichen Richtungen durch die Summierwirkung auch sehr kleine resultierende Steigungen erzeugt werden können. Weiterhin können die vom einen Einzelteil 2 auf das andere Einzelteil 2' zu übertragenen Axialkräfte über das einteilige Grundelement 1 gelenkt werden.

In der oberen Figurenhälfte sind dagegen die Rollen 15, 16 mit dem sie verbindenden Achsenteil einstückig miteinander ausgebildet.

Die dem einteiligen Grundelement 1 zuzuführende rotatorische Eingangsbewegung wird im Ausführungsbeispiel durch einen vorgeschalteten weiteren Bewegungswandler erzeugt. Dieser vorgeschaltete Bewegungswandler arbeitet mit einem Steilgewinde-Schraubtrieb, mit dem eine in beiden Richtungen vorgenommene translatorische Eingangsstellbewegung 22 in einen Drehwinkel relativ zur Drehspindel 19 umgewandelt wird, wobei dann dieser Drehwinkel dem einteiligen Grundelement 1 mitgeteilt wird. Die Eingangsstellbewegung 22 wird zunächst mit (nicht dargestellten) stationär gelagerten Organen erzeugt, z. B. auf hydraulische Weise, was - da bekannt - hier keiner weiteren Erläuterung bedarf. Über die synchron mit der Drehspindel 19 umlaufenden Innenringe 54' und 55' der Axialwälzlager 54 und 55 wird die Eingangsstellbewegung 22 einer Führungsbuchse 56 mitgeteilt, die auf der Trägerhülse 36 um den Hub H axial längsverschieblich angeordnet ist. Mit der Führungsbuchse 56 fest verbunden, angedeutet durch die Mittellinie 57, ist die Schiebehülse 24, welche innen eine Führungsnut 59 aufweist die - siehe die untere Figurenhälfte - mit dem Kopfteil einer wälzgelagerten Rolle 25 im Eingriff steht. Die mittels eines Nadellagers 60 und eines Kugellagers 61 im Bundteil 38 des Schubrings 23 wälzgelagerte Rolle 25 wälzt sich bei einer Axialbewegung der Schiebehülse 24 mit ihrem Kopfteil in der Führungsnut 59 ab und stellt somit, da sie Drehmomente auf die Drehspindel 19 zu übertragen vermag, eine Drehmomentabstützung bzw. Geradführung für die Schiebehülse 24 dar. Diese Art der Drehmomentabstützung gilt auch für die in der oberen Figurenhälfte dargestellte Schiebehülse 24, obwohl dort die Rolle 25 nicht nochmals dargestellt ist.

Für die spezielle Funktion der Wandlung der Eingangsstellbewegung 22 in einen Drehwinkel unter Mitwirkung der Schiebehülse 24 sind in den beiden Figurenhälften zwei unterschiedliche Ausführungsformen für die Ausbildung des rechten Endes der Schiebehülse 24 dargestellt. Für beide Ausführungsformen 21 bzw. 21' des vorgeschalteten Bewegungswandlers gilt, daß der Steilgewindeschraubvorgang unter Mithilfe von auf der äußeren Zylinderseite des einteiligen Grundelements 1 untergebrachten spiralförmigen Steilgewindenuten 26 erfolgt. In der oberen Figurenhälfte erkennt man, daß das rechte Ende 28 der Schiebehülse 24 des Bewegungswandlers 21' mit spiralförmig ausgebildeten, nach innen weisenden Zähnen 27 ausgestattet ist, welche bei ihrer Verschiebung nach rechts eine Verdrehung des einteiligen Grundelements 1 bewirken. Der mit Friktion behaftete Vorgang der Bewegungswandlung kann erwünscht sein, wenn es gilt, nach vollzogenem Spannvorgang eine Wirkungsumkehr des Wandlungsvorganges abzuschwächen oder gar zu verhindern (Selbsthemmung), um somit nach vollzogenem Spannvorgang bei laufender Drehspindel 19 eine Entlastung der Axialwälzlager 54, 55 vornehmen zu können. - In der unteren Figurenhälfte ist der vorgeschaltete Bewegungswandler 21 mit dem zugehörigen rechten Ende 62 der Schiebehülse 24 dargestellt. Hier erkennt man, daß die Wandlung der Eingangsstellbewegung 22 in einen Drehwinkel am einteiligen Grundelement 1 durch Abwälzen des Kopfteils einer Rolle 25' in der Nut 26 vollzogen wird. Die Rolle 25' selbst ist mittels eines Nadellagers 63 und eines Kugellagers 64 in einer besonderen Lagerbuchse 65 gelagert, welche von innen in das rechte Ende 62 der Schiebehülse 24 eingesetzt ist.

Zur Durchführung eines kompletten Spannvorgangs mit einer Spannbewegung des Spannrohrs 44 nach rechts mit einem Spannhub von h = 3 mm wird dem stationär gelagerten Übertragungsorgan 53, beginnend mit der äußersten linken Stellung in der oberen Figurenhälfte, eine nach rechts gerichtete Eingangsstellbewegung 22 aufgeprägt, welche nach Durchführung des Hubes H = 60 mm mit der äußersten, in der unteren Figurenhälfte dargestellten rechten Stellung des Übertragungsorgans 53 endet. Während der Durchführung des Hubes H wird zugleich eine Relativverdrehung des einteiligen Grundelements 1 um einen Winkel von ca. 27° relativ zur Drehspindel 19 bewirkt. Man erkennt, daß mit dem Verhältnis H/h = 20 die über die Axialwälzlager 54, 55 geleitete Axialkraft mit einem Faktor 20 verstärkt als Spannkraft am Spannrohr 44 abgenommen werden kann. Eine Nachrechnung für die Steilheit des Spiralwinkels der Nuten 26 unter den gegebenen Durchmesserverhältnissen ergibt, daß dieser bei etwa 26° liegen muß. Dieser Winkelwert sollte bei der Verwendung eines Gleit-Steilgewinde-Schraubtriebes nicht wesentlich überschritten werden, was gleichbedeutend ist mit der Feststellung, daß für diesen Verwendungsfall der Drehwinkel des einteiligen Grundelements 1 auch nicht wesentlich über 30° gesteigert werden könnte. Setzt man den geforderten Betrag von h = 3 mm für die translatorische Ausgangsbewegung in Relation zu dem Betrag von 30° für den Drehwinkel des einteiligen Grundelements, so erkennt man leicht die Notwendigkeit für die Schaffung einer relativ großen resultierenden Gewindesteigung an den Einzelteilen 2, 2' des zweiteiligen Grundelements.

**Patentansprüche**

1. Bewegungswandler zum Umsetzen einer rotatorischen Eingangsbewegung in eine translatorische Ausgangsbewegung, bestehend aus einem Wälzgewindetrieb (5) mit zwei koaxial in einander angeordneten Grundelementen (1), (2, 2') und zwischen beiden sich abwälzenden Wälzkörpern (3), und aus einem in der Koordinatenachse der Ausgangsbewegung nicht verlagerbaren Anschlußbauelement (4), relativ zu welchem die rotatorische Eingangsbewegung und die translatorische Ausgangsbewegung durchführbar sind und gegen welches das rotatorisch bewegte Grundelement (1) über eine Wälzlagerung axial abgestützt ist, gekennzeichnet durch die Kombination der folgenden Merkmale:

a) die Wälzkörper sind Rollen (15, 16),

b) das zweite, relativ zum Anschlußbauelement (4) nicht rotatorisch bewegte Grundelement ist zweiteilig ausgebildet und jedes der dadurch gebildeten beiden Einzelteile (2, 2') ist mit einem Wälzgewinde (37, 39) gleichen Wälzdurchmessers und gleicher Gangzahl, jedoch mit Steigungswinkeln mit in Bezug auf das andere Einzelteil entgegengesetztem Vorzeichen versehen,

c) dem Wälzgewinde (37, 39) jedes Einzelteils (2, 2') ist ein eigener Rollenkranz (12, 13) von auf dem Wälzumfang des Einzelteils verteilten Rollen (15, 16) mit Rollenwälzbahnen zugeordnet, die sich am Wälzgewinde des Einzelteils (2, 2') einerseits und und am einteiligen Grundelement (1) andererseits abwälzen,

d) eines der Einzelteile (2) bildet das Anschlußbauelement (4) oder ist mit dem Anschlußbauelement fest verbunden, und der diesem Einzelteil (2) zugeordnete Rollenkranz (12) bildet die Wälzlagerung für die axiale Abstützung des rotatorischen Grundelements (1) gegen das Anschlußbauelement (4),

e) die translatorische Ausgangsbewegung (7) ist die Summe der beiden einzelnen translatorischen Relativbewegungen jedes der beiden Einzelteile (2, 2') gegenüber jeweils dem einteiligen Grundelement (1),

f) die Rollen (15) des einen Rollenkranzes (12) und die Rollen (16) des anderen Rollenkranzes (13) sind miteinander durch mechanische Mittel gekoppelt, die einen Synchronlauf beider Rollenkränze (12, 13) bezüglich ihres Drehwinkels um die Achse (20) des Wälzgewindetriebes (5) erzwingen.

2. Bewegungswandler nach Anspruch 1, dadurch gekennzeichnet, daß die mechanischen Mittel die Rollen (15, 16) achsparallel zur Mittelachse (20) der Grundelemente (1, 2, 2') halten.

3. Bewegungswandler nach Anspruch 1 oder 2, dadurch gekennzeichnet, daß die mechanischen Mittel von mehrfach vorhandenen Körpern gebildet sind, die je eine Rolle (15) des einen Rollenkranzes (12) mit je einer Rolle (16) des anderen Rollenkranzes gleichlaufend verbinden.

4. Bewegungswandler nach Anspruch 3, dadurch gekennzeichnet, daß die Körper Achsenteile (17) sind, welche die beiden Rollen in koaxialer Lage miteinander verbinden.

5. Bewegungswandler nach Anspruch 4, dadurch gekennzeichnet, daß die beiden Rollen (15, 16) und das Achsenteil (17) einstückig miteinander ausgebildet sind.

6. Bewegungswandler nach Anspruch 1 oder 2, dadurch gekennzeichnet (12, 13), daß die mechanischen Mittel von einem beiden Rollenkränzen (12, 13) gemeinsamen Käfigring gebildet sind, in dem die Rollen (15, 16) beider Rollenkränze (12, 13) formschlüssig geführt sind.

7. Bewegungswandler nach einem der Ansprüche 1 bis 6, dadurch gekennzeichnet, daß die Rollenwälzbahnen aller Rollen (15, 16) ohne Gewindesteigung ausgeführt und durch die Seitenflanken von im gleichen axialen Abstand (40) am Umfang der Rollen (15, 16) eingebrachten Rillen (8) gebildet sind.

8. Bewegungswandler nach Anspruch 7, dadurch gekennzeichnet, daß die Wälzbahnen am einteiligen Grundelement (1) ohne Gewindesteigung ausgeführt und durch die Seitenflanken von im gleichen axialen Abstand am Umfang des einteiligen Grundelements (1) eingebrachten Rillen (41) gebildet sind.

9. Bewegungswandler nach Anspruch 4 oder 5, dadurch gekennzeichnet, daß am Umfang der Rollen (15, 16) eine Verzahnung (9) vorgesehen ist, die mit einer korrespondierenden Umfangsverzahnung (10, 11) am einen und/oder anderen Grundelement (1, 2) im Eingriff ist.

10. Bewegungswandler nach einem der Ansprüche 1 bis 9, dadurch gekennzeichnet, daß die rotatorische Eingangsbewegung dem einteiligen Grundelement (1) durch einen vorgeschalteten weiteren Bewegungswandler (21, 21') mitgeteilt wird, der eine translatorische Stellbewegung (22) in die rotatorische Eingangsbewegung des Grundelements (1) durch ein Getriebe (24, 25', 26, 27) wandelt, das in umgekehrter Wirkrichtung eine rotatorische Bewegung des Grundelements (1) verhindert.